(19) Europäisches Patentamt
European Patent Office
Office européen des brevets

(11) **EP 2 537 284 B1**

(12) **FASCICULE DE BREVET EUROPEEN**

(45) Date de publication et mention
de la délivrance du brevet:
**20.04.2016 Bulletin 2016/16**

(21) Numéro de dépôt: **11712927.0**

(22) Date de dépôt: **17.02.2011**

(51) Int Cl.:
*H04L 9/08* (2006.01)   *H04L 9/30* (2006.01)
*G09C 1/00* (2006.01)

(86) Numéro de dépôt international:
**PCT/FR2011/050336**

(87) Numéro de publication internationale:
**WO 2011/101598 (25.08.2011 Gazette 2011/34)**

(54) **PROCEDE CRYPTOGRAPHIQUE DE COMMUNICATION D'UNE INFORMATION CONFIDENTIELLE**

KRYPTOGRAFISCHES VERFAHREN ZUR MITTEILUNG VON VERTRAULICHEN INFORMATIONEN

CRYPTOGRAPHIC METHOD FOR COMMUNICATING CONFIDENTIAL INFORMATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2010 FR 1051190**

(43) Date de publication de la demande:
**26.12.2012 Bulletin 2012/52**

(73) Titulaire: **Centre National de la Recherche Scientifique (CNRS)**
**75016 Paris (FR)**

(72) Inventeurs:
• **GABORIT, Philippe**
**F-87220 Feytiat (FR)**
• **AGUILAR MELCHOR, Carlos**
**F-87000 Limoges (FR)**

(74) Mandataire: **Derambure, Christian et al**
**Derambure Conseil**
**66, rue de la Chaussée d'Antin**
**75440 Paris Cedex 09 (FR)**

(56) Documents cités:
• **REGEV O: "On lattices, Learning with Errors, Random Linear Codes, and Cryptography", INTERNET CITATION, 24 mai 2005 (2005-05-24), pages 84-93, XP002497024, [extrait le 2005-01-01]**
• **DIFFIE W ET AL: "NEW DIRECTIONS IN CRYPTOGRAPHY", IEEE TRANSACTIONS ON INFORMATION THEORY, IEEE, US LNKD-DOI:10.1109/TIT.1976.1055638, vol. 22, no. 6, 1 novembre 1976 (1976-11-01), pages 644-654, XP000565260, ISSN: 0018-9448**
• **KASAHARA M: "A CONSTRUCTION OF PUBLIC-KEY CRYPTOSYSTEM USING ALGEBRAIC CODING ON THE BASIS OF SUPERIMPOSITION AND RANDOMNES", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E89A, no. 1, 1 janvier 2006 (2006-01-01), pages 47-54, XP001241425, ISSN: 0916-8508**

## Description

### Domaine technique

L'invention concerne le domaine de la communication cryptographique d'une information confidentielle entre une première entité A et une deuxième entité B.

Plus particulièrement, l'invention concerne le domaine de la communication cryptographique d'une information confidentielle pouvant être réalisée sur un dispositifs cryptographiques à bas coût possédant des capacités de calcul limité, notamment des cartes à puce ou des étiquettes radio fréquence.

Selon un premier aspect l'invention concerne un procédé cryptographique de communication d'une information confidentielle entre une première entité et une deuxième entité.

Selon un autre aspect, l'invention concerne un programme d'ordinateur comprenant une pluralité d'instructions pour la mise en oeuvre, à l'exécution, du procédé selon l'invention, un dispositif cryptographique comprenant des moyens de calculs agencés pour mettre en oeuvre le procédé selon l'invention ainsi qu'un support de données comprenant un tel dispositif cryptographique.

### Présentation de l'état de la technique et du problème technique

Il existe deux types d'approches pour le codage cryptographique.

Une première approche très répandue est basée sur l'algorithme RSA, de Rivest, Shamir et Adleman, dont la sécurité réside dans la difficulté mathématique pour factoriser de grands nombres entiers.

Toutefois, un tel procédé cryptographique présente plusieurs inconvénients. En particulier, dans l'algorithme RSA, il est nécessaire de procéder à des calculs sur des clés publiques de grandes tailles, et notamment des calculs d'exponentielles discrètes. De tels calculs peuvent être lents, tout particulièrement lorsqu'ils sont implémentés sur des dispositifs cryptographiques à bas coût possédant des capacités de calcul limitées, tels que sur les cartes à puce ou les étiquettes radio fréquence.

Parmi les alternatives aux procédés cryptographiques d'authentification basés sur l'algorithme RSA, sont connus les procédés cryptographiques d'authentification utilisant un décodage de code correcteur d'erreurs à partir d'une matrice publique. Ces procédés ont l'avantage d'être la source de problèmes mathématiques NP-complets donc très difficiles à résoudre. Dès lors, ces procédés sont très sécurisés.

L'utilisation des codes correcteurs d'erreurs en cryptographie est connue depuis les années 1980. La demande EP-A-0 661 846 décrit un tel procédé cryptographique d'authentification utilisant un décodage de code correcteur d'erreurs à partir d'une matrice publique. Cette demande, ainsi que la publication du demandeur de cette demande, "A new identification scheme based on syndrome decoding", J. Stern 1993, décrivent un protocole d'authentification dit protocole par syndrome de Stern, utilisant une matrice publique aléatoire de très grande taille, typiquement de l'ordre de cent à mille kilobits. De même, la publication "Improved Identification schemes based on error-correcting codes", Veron, Applicable Alegbra in Engineering , Communication and Computing, 1 997, décrit une variante du protocole par syndrome, toujours dans le cadre d'un procédé cryptographique d'authentification utilisant un décodage de code correcteur d'erreurs à partir d'une matrice publique.

Toutefois, les contraintes de stockage des dispositifs cryptographiques à bas coûts ne permettent pas d'implémenter un tel protocole.

D'autres procédés de cryptographie connus de l'homme du métier sont basés sur le protocole Diffie-Hellman qui a servi de fondation à l'élaboration de nombreux développements concernant la cryptographie moderne.

Ce protocole a été décrit pour la première fois dans la publication « New Directions in Cryptography W. Diffie and M. E. Hellman, IEEE Transactions on Information Theory, vol. IT-22, Nov. 1976 » et consiste en ce que Alice et Bob partage une information confidentielle exp(ab) après avoir échangé une première information exp(a) et une seconde information exp(b), tels que a et b correspondent à des nombres entiers secrets et exp() à une fonction exponentielle dans le groupe G. La sécurité de ce protocole découle de la difficulté qui existe à inverser la fonction exponentielle de façon efficace et plus particulièrement de la difficulté qui existe à résoudre le problème exp(ab) à partir de exp(a) et exp(b).

Le protocole Diffie-hellman est utilisé dans de nombreuses applications mais présente un coût non négligeable puisque la résolution de problèmes exponentiels est, d'un point de vue algorithmique, l'une des fonctions arithmétiques les plus complexe. Ceux qui ont essayé de limiter ce coût en remplaçant la fonction exponentielle par d'autres fonctions ont rencontré de nombreuses difficultés et n'ont d'ailleurs jamais pu identifier une solution qui soit à la fois peu coûteuse en calculs et suffisamment sécurisée.

Il est également connu d'un domaine technique différent des solutions de cryptographie quantique ayant permis de résoudre des problèmes d'échange de clés confidentielles. Le protocole de communication quantique permet à Alice d'être en possession d'une variable aléatoire X et à Bob d'être en possession d'une version bruitée Y de la variable aléatoire X.

Ainsi, grâce à l'utilisation de protocoles de communication classiques Bob peut, lors d'une phase de réconciliation, écarter le bruit de la version bruitée Y de la variable aléatoire X et en déduire une information confidentielle. L'information confidentielle est ainsi partagée par Alice et Bob de façon inconditionnelle. Ce protocole de communication quantique est donc avantageux puisqu'il permet d'échanger une information confidentielle en ayant la certitude que celle-ci ne sera pas interceptée. Mais il présente l'inconvénient majeur de nécessiter l'utilisation d'un tunnel quantique entre Alice et Bob, ce qui est extrêmement contraignant d'un point de vue pratique.

L'article « On Lattices, Learning with Errors, Random Linear Codes, and Cryptography », de O. Regev, XP-002497024, décrit à la section 4 un procédé de cryptographie à clé publique.

Il existe donc un besoin non satisfait dans le domaine de la cryptographie pour la réalisation d'un protocole de communication qui permette d'échanger une information confidentielle sans être trop coûteux à la fois en terme de ressources et d'exécution, afin de pouvoir être intégré sur des dispositifs de cryptographie à bas coûts tels que des cartes à puce ou des puces d'identification radiofréquences (RFID) mais qui assure, néanmoins, un degré de sécurité qui soit suffisamment fiable et un temps de réponse suffisamment court.

## Exposé de l'invention

L'invention vise donc à répondre à ces besoins non satisfaits.

A cet effet, l'invention vise un procédé cryptographique de communication d'une information confidentielle m entre une première entité (A) électronique et une deuxième entité (B) électronique comportant une étape de distribution et une étape de réconciliation, l'étape de distribution comportant plusieurs étapes consistant en ce que :

- d'une part, la première entité (A) :

  o calcule un premier syndrome $SA = X_A + f(Y_A)$ à partir d'une première information secrète composée de deux éléments primaires $X_A$ et $Y_A$ appartenant à un anneau R et présentant une norme sensiblement petite vis-à-vis d'un élément $f(X_A)$ ou $f(Y_A)$,

  - l'anneau R possédant l'addition et la multiplication, et
  - f étant une loi de composition interne associant à tout élément $X_I$ de l'anneau R un autre élément $f(X_I)$ de l'anneau R, et possédant la propriété que pour toute paire d'éléments $X_I$ et $Y_I$ de R, tels que $X_I$ et $Y_I$ ont une petite norme vis-à-vis des éléments $f(X_I)$ et $f(Y_I)$, alors $X_I.f(Y_I) - Y_I.f(X_I)$ est de petite norme, et

  o émet un premier message composé à partir de ce premier syndrome SA de sorte que ledit premier syndrome SA soit accessible par la deuxième entité (B),

- d'autre part, la deuxième entité (B) :

  o calcule un deuxième syndrome $S_B = X_B + f(Y_B)$ à partir d'une deuxième information secrète composée de deux éléments secondaires $X_B$ et $Y_B$ appartenant à l'anneau R et présentant une norme sensiblement petite vis-à-vis d'un élément $f(X_B)$ ou $f(Y_B)$,
  o transmet à la première entité (A) un deuxième message composé à partir du deuxième syndrome $S_B$ de sorte que ledit deuxième syndrome $S_B$ soit accessible par la première entité (A),

- dans lequel lors de cette première étape de distribution, la première entité (A) et la deuxième entité (B) calculent respectivement une première valeur intermédiaire $P_A$ et une deuxième valeur intermédiaire $P_B$, telles que :

  o $P_A = Y_A.S_B = Y_A.X_B + Y_A.f(Y_B)$, et
  o $P_B = Y_B.S_A = Y_B.X_A + Y_B f(Y_A)$,
  o de sorte que, lors de l'étape de réconciliation, la première entité (A) soit capable de retrouver l'information confidentielle par une opération de déchiffrement d'un message bruité composé par la deuxième entité (B) à partir, notamment, de la deuxième valeur intermédiaire $P_B$.

Selon une réalisation, le premier message émis par la première entité (A) est transmis directement à destination de la deuxième entité (B).

Selon une réalisation, le message bruité composé par la deuxième entité (B) lors de la phase de réconciliation comprend une donnée C obtenue à partir notamment de la deuxième valeur intermédiaire $P_B$ et de l'information confidentielle m.

Selon une réalisation, la première entité (A) décode l'information confidentielle m à partir notamment du message bruité et de la première valeur intermédiaire $P_A$.

Selon une réalisation, l'information confidentielle m est encodée dans la donnée C du message bruité, par un code correcteur d'erreur.

Selon une réalisation, la donnée C du message bruité est telle que $C = m.G + P_B + e$, avec :

- m qui représente l'information confidentielle,
- G qui représente la matrice génératrice d'un code correcteur d'erreur sur lesquels la première entité A et la deuxième entité B se sont préalablement publiquement accordées, et
- e qui représente un vecteur d'erreurs aléatoires de longueur n et de norme petite, la première entité A et la deuxième entité B s'étant préalablement publiquement accordées sur la longueur n.

Selon une réalisation, la donnée C du message bruité est telle que $C = m.G + v[P_B]$, avec :

- m qui représente l'information confidentielle,
- G qui représente la matrice génératrice d'un code correcteur d'erreur sur lesquels la première entité A et la deuxième entité B se sont préalablement publiquement accordées, et
- v[] qui représente une opération consistant à extraire p coordonnées parmi les n coordonnées d'un vecteur, la première entité A et la deuxième entité B s'étant préalablement accordées sur la valeur du p.

Selon une réalisation, la donnée C du message bruité est telle que $C = m.G + v[P_B] + e$, avec :

- m qui représente l'information confidentielle,
- G qui représente la matrice génératrice d'un code correcteur d'erreur sur lesquels la première entité A et la deuxième entité B se sont préalablement publiquement accordées,
- v[] qui représente une opération consistant à extraire p coordonnées parmi les n coordonnées d'un vecteur, la première entité A et la deuxième entité B s'étant préalablement accordées sur la valeur du p,
- e qui représente un vecteur d'erreurs aléatoires de longueur n et de norme petite, la première entité A et la deuxième entité B s'étant préalablement publiquement accordées sur la longueur n.

Selon une réalisation, la première entité (A) compose une clé de chiffrement soit à partir de l'information confidentielle m, soit à partir de la deuxième valeur intermédiaire $P_B$, soit à partir d'une combinaison de l'information confidentielle et de la deuxième valeur intermédiaire $P_B$.

Selon une réalisation, après avoir émis le premier message composé à partir du premier syndrome $S_A$, la première entité (A) met ce premier message à disposition de la deuxième entité (B) dans un espace publique accessible au moins à une autre entité électronique.

Selon une réalisation, après avoir calculé le deuxième syndrome $S_B$, la deuxième entité (B) transmet, à la première entité (A) :

- le deuxième message composé à partir du deuxième syndrome $S_B$, et
- le message bruité composé à partir d'une donnée C obtenue à partir de la deuxième valeur intermédiaire $P_B$ et de l'information confidentielle m.

Selon une réalisation, la première entité A décode l'information confidentielle à partir de du deuxième message et du message bruité.

Selon une réalisation, la première entité A décode l'information confidentielle m à partir de du deuxième syndrome $S_B$ composant le deuxième message, de la deuxième valeur intermédiaire $P_B$ composant le message bruité et de la première valeur intermédiaire $P_A$.

Selon une réalisation, l'information confidentielle m est encodée dans la donnée C du message bruité, par un code correcteur d'erreur.

Selon une réalisation, la donnée C du message bruité est telle que $C = m.G + P_B + e$, avec :

- m qui représente l'information confidentielle,
- G qui représente la matrice génératrice d'un code correcteur d'erreur sur lesquels la première entité A et la deuxième entité B se sont préalablement publiquement accordées, et
- e qui représente un vecteur d'erreurs aléatoires de longueur n et de norme petite, la première entité A et la deuxième entité B s'étant préalablement publiquement accordées sur la longueur n.

Selon une réalisation, la donnée C du message bruité est telle que $C = m.G + v[P_B]$, avec :

- m qui représente l'information confidentielle,
- G qui représente la matrice génératrice d'un code correcteur d'erreur sur lesquels la première entité A et la deuxième entité B se sont préalablement publiquement accordées, et
- v[] qui représente une opération consistant à extraire p coordonnées parmi les n coordonnées d'un vecteur, la première entité A et la deuxième entité B s'étant préalablement accordées sur la valeur du p.

Selon une réalisation, la donnée C du message bruité est telle que $C = m.G + v[P_B] + e$, avec :

- m qui représente l'information confidentielle,
- G qui représente la matrice génératrice d'un code correcteur d'erreur sur lesquels la première entité A et la deuxième entité B se sont préalablement publiquement accordées,
- v[] qui représente une opération consistant à extraire p coordonnées parmi les n coordonnées d'un vecteur, la première entité A et la deuxième entité B s'étant préalablement accordées sur la valeur du p,
- e qui représente un vecteur d'erreurs aléatoires de longueur n et de norme petite, la première entité A et la deuxième entité B s'étant préalablement publiquement accordées sur la longueur n.

Selon une réalisation, la première entité (A) compose message d'authentification soit à partir de l'information confidentielle m, soit à partir de la deuxième valeur intermédiaire $P_B$, soit à partir d'une combinaison de l'information confidentielle m et de la deuxième valeur intermédiaire $P_B$.

Selon une réalisation, l'anneau R est l'anneau $F_q[x] / (X^n - 1)$, c'est-à-dire l'ensemble des polynômes à coefficients dans le corps Fq à q éléments pour lesquels on considère le reste par la division du polynôme $(X^n - 1)$.

Selon une réalisation, l'anneau R est l'anneau $F_q[x] / (X^n - 1)$, c'est-à-dire l'ensemble des polynômes à coefficients dans le corps Fq à q éléments pour lesquels on considère le reste par la division du polynôme $(X^n - 1)$.

Selon une réalisation, la norme correspond à la distance de hamming.

Selon une réalisation:

- n est sensiblement égale à 6000, et
- $X_A$, $X_B$, $Y_A$, $Y_B$ présentent une norme égale à 35
- de sorte que la norme de $P_A - P_B$ est sensiblement égale à 2400.

Selon une réalisation, l'anneau R est l'anneau Z/pZ, c'est-à-dire l'ensemble des entiers modulo p moins le reste de la division par p.

Selon une réalisation, la norme est une norme euclidienne.

Selon une réalisation:

- p est sensiblement égale à 2500,
- f(x)=h.x modulo p avec h un nombre aléatoire plus petit que p, et/ou
- $X_A$, $X_B$, $Y_A$, $Y_B$ sont des éléments de R de norme plus petite que racine (p).

Selon un autre aspect, l'invention concerne un programme d'ordinateur comprenant une pluralité d'instructions pour la mise en oeuvre, à l'exécution, du procédé selon l'une quelconque des réalisations 1 à 24.

Selon un autre aspect, l'invention concerne dispositif cryptographique comprenant des moyens de calculs agencés pour mettre en oeuvre le procédé selon l'une des réalisations 1 à 24.

## Description des figures

Des exemples détaillés de réalisation de l'invention sont décrits, ci-dessous, en références aux figures annexées, dans lesquelles :

- la figure 1 est une représentation schématique d'une première réalisation du procédé cryptographique selon l'invention par lequel une première entité et une deuxième entité s'échangent une clé de chiffrement ;

- la figure 2 est une représentation schématique d'une deuxième réalisation du procédé cryptographique selon l'invention, par lequel une première entité communique un message chiffré à une deuxième entité ; et

- la figure 3 est une représentation schématique d'une troisième réalisation du procédé cryptographique selon l'invention, par lequel une première entité s'authentifie vis-à-vis d'une deuxième entité.

Il convient en premier lieu de souligner que dans le cadre de l'invention de terme de « message » correspond à tout type de signal ou bloc d'information véhiculé au travers d'un support physique ou d'ondes radiofréquences. Ces messages sont, par exemple, formés par une trame de données constituée d'une succession de « 0 » et de « 1 » caractérisant au moins une information pouvant être déduite d'une opération appropriée.

D'autre part, un « anneau » R peut être entendu comme toute structure algébrique sur laquelle deux opérations satisfont certaines des propriétés de l'addition et la multiplication. A cet égard, l'invention propose d'utiliser comme structure algébrique, un anneau (R, +, x) connu publiquement plutôt qu'un groupe tel que l'utilisait le protocole traditionnel de Diffie-Hellman.

En outre, une « norme », ou distance, est une application sur l'anneau R à valeurs réelles positives et satisfaisant les hypothèses suivantes : séparation, homogénéité, sous additivité et sous multiplicative.

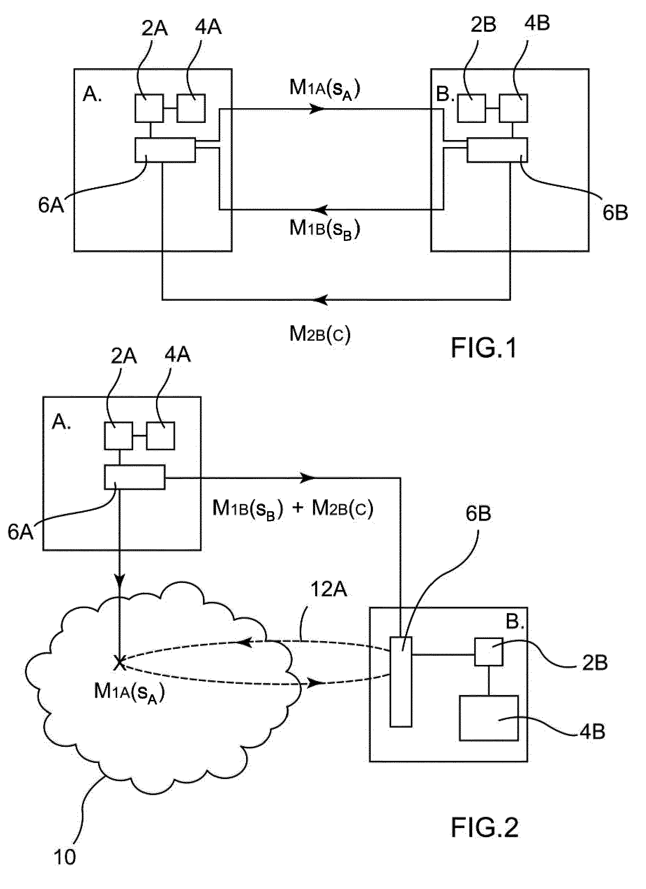

Un premier mode de réalisation du procédé selon l'invention est décrit en référence à la figure 1.

Selon cette première réalisation, le procédé cryptographique selon l'invention est utilisé pour réaliser un échange de clé de chiffrement permettant à une première entité A électronique, nommée Alice, et une deuxième entité B électronique, nommée Bob, d'échanger des informations confidentielles chiffrées. Pour lui permettre d'émettre, de recevoir et de stocker des données, Alice comporte une un processeur 2A, un espace mémoire 4A et une unité de communication 6A. De façon similaire, Bob comporte également un processeur 2B, un espace mémoire 4B et une unité de communication 6B.

Une première étape du procédé correspond à une étape dite de distribution.

Selon cette première étape, Alice et Bob s'échangent des données afin de se mettre d'accord sur un anneau R, un entier n et un élément h de l'anneau R. L'élément h est choisi de façon aléatoire et peut être considéré comme un équivalent du générateur utilisé dans le cadre de l'étape d'élévation de puissance du protocole de Diffie-Hellman.

Selon un exemple de réalisation, l'anneau R sélectionné correspond à $F_2[x]/(X^n-1)$, c'est-à-dire l'ensemble des polynômes à coefficients dans le corps $F_2$ à deux éléments pour lesquels on considère le reste par la division du polynôme $(X^n-1)$. On utilise alors comme fonction norme la distance de hamming.

Il convient de souligner que, de façon alternative, il serait également possible de sélectionner d'autres couples d'anneau R et de norme, parmi lesquels :

- l'anneau Z/pZ et la norme euclidienne ;
- l'anneau $(Z/pZ)[x]/(x^n-1)$ et la norme euclidienne également ; et
- l'anneau $(Z/p^rZ)[X]/(x^n-1)$ et pour norme le rang métrique.

Dans ce mode de réalisation, il est possible d'utiliser un code binaire doublement circulant C [2n, n] comprenant une matrice de vérification de parité de la forme $[I_n|H]$ où $I_n$ est la matrice identité de taille n x n et h est telle que :

$$\mathbf{H} = \begin{bmatrix} h_0 & h_{n-1} & \dots & h_1 \\ h_1 & h_0 & \dots & h_2 \\ h_2 & h_1 & \dots & h_3 \\ \dots\dots\dots\dots\dots\dots \\ h_{n-1} & h_{n-2} & \dots & h_0 \end{bmatrix}$$

Après avoir sélectionnés l'anneau R, le générateur h et l'entier n, Alice et Bob sélectionnent séparément et de façon secrète un couple d'éléments primaires $X_A$, $Y_A$ pour Alice et $X_B$, $Y_B$ pour Bob de sorte que ces éléments primaires $X_A$, $Y_A$, $X_B$ et $Y_B$ sont de petite norme, et présentent donc une petite distance de Hamming, par rapport à un nombre réel positif w. Par exemple, pour un anneau R : F2[x]/(x^n-1) une telle petite distance de Hamming peut être de l'ordre de racine_çarré(n)/10.

Alternativement, pour un mode de réalisation où l'anneau R sélectionné serait Z/pZ, un exemple de petite norme correspondant à la distance min(x,p-x) petit serait racine_carrée (p) / 100.

Alice et bob calculent ensuite respectivement les syndromes SA et $S_B$ à partir d'une fonction f telle que : SA = $f(X_A,Y_A) = X_A.h + Y_A$ et $S_B = f(X_B,Y_B) = X_B.h + Y_B$, où f est une loi de composition interne associant à tout élément $X_I$ de l'anneau R un autre élément $f(X_I)$ de l'anneau R et possédant la propriété que pour toute paire d'éléments $X_I$ et $Y_I$ de R, tels que $X_I$ et $Y_I$ ont une petite norme vis-à-vis des éléments $f(X_I)$ et $f(Y_I)$, alors $X_I.f(Y_I) - Y_I.f(X_I)$ est de petite norme.

Alice transmet à Bob un premier message $M_{1A}(S_A)$ composé notamment à partir du premier syndrome SA de sorte que ledit premier syndrome SA puisse être récupéré par Bob. Parallèlement, Bob transmet à Alice un deuxième message $M_{1B}(S_B)$ composé notamment à partir du deuxième syndrome $S_B$ de sorte que ledit deuxième syndrome $S_B$ puisse être récupéré par Alice.

Alice calcule alors une première valeur intermédiaire $P_A$, telle que :

-

$$P_A = Y_A.S_B = Y_A.X_B + Y_A.h.Y_B.$$

Et Bob calcule de façon similaire une deuxième valeur intermédiaire $P_B$, telle que :

-

$$P_B = Y_B.S_A = Y_B.X_A + Y_B.h.Y_A.$$

Dès lors, Alice et Bob sont respectivement en possession d'une première valeur intermédiaire $P_A$ et d'une deuxième valeur intermédiaire $P_B$ qui diffèrent l'une de l'autre par la valeur $Y_A.X_B - Y_B.X_A$. Or, puisque les éléments primaires $X_A$, $Y_A$, $X_B$ et $Y_B$ ont été sélectionnés de sorte qu'ils aient une petite norme vis-à-vis du paramètre w, et puisque la distance de hamming est sous multiplicative dans $F_2[X]/(X^n-1)$, alors la première valeur intermédiaire $P_A$ détenue par Alice diffère de la deuxième valeur intermédiaire $P_B$ détenue par Bob d'une valeur dont la norme est nécessairement inférieure à $2\,w^2$.

À l'issue de l'étape de distribution, Alice et Bob sont donc en possession de deux messages $M_{1A}(S_A)$ et $M_{1B}(S_B)$ correspondant à deux trames de données dont la première comporte le premier syndrome SA et la deuxième comporte le deuxième syndrome $S_B$.

Intervient alors une seconde étape dite de réconciliation.

Selon un premier mode de réalisation la phase de réconciliation consiste en ce qu'Alice et Bob choisissent de manière publique une opération v[] consistant à sélectionner de façon aléatoire p bits parmi les n bits constituant les première et deuxième valeur intermédiaire $P_A$ et $P_B$, tel qu'il existe une probabilité suffisante que ces p bits sélectionnés par Alice et Bob permettent d'en déduire une information commune.

Pour ce faire, Bob transmet à Alice un message bruité $M_{2B}(C)$ composé à partir d'une donnée C correspondant à un code correcteur d'erreur de longueur p permettant de corriger une erreur d'une valeur inférieure ou égale à $2w^2$ et tel que :

$$C = m.G + v[P_B]$$

où

- m représente alors une information confidentielle
- G représente la matrice génératrice d'un code correcteur d'erreur sur lesquels Alice et Bob se sont préalablement publiquement accordés
- v[]représente une opération de troncature consistant à extraire p bits parmi les n bits d'un vecteur.

Du fait de la construction ci-dessus, m.G est très bruité par rapport à $v[P_B]$.

Alice peut donc calculer la valeur de $C - v[P_A]$ et en déduire $m.G + v[P_B-P_A]$. Mais comme $v[P_B-P_A]$ est relativement petit, Alice est capable en utilisant le code correcteur d'erreur de corriger cette erreur $v[P_B-P_A]$ qui a été ajoutée à m.G et donc de retrouver l'information confidentielle m ainsi que $v[P_B]$.

Alice peut alors avantageusement composer une clé de chiffrement soit à partir de l'information confidentielle m. Mai s de façon alternative, il est également possible que cette clé de chiffrement soit composée à partir de la deuxième valeur intermédiaire $P_B$ ou à partir d'une combinaison de l'information confidentielle m et de la deuxième valeur intermédiaire $P_B$.

Sont décrits dans le tableau ci-dessous, plusieurs exemples de paramètres pouvant être utilisés dans le protocole selon l'invention, dans lesquels :

- le paramètre n correspond au nombre de coordonnées des syndrome SA et $S_B$ ;
- le paramètre sb correspond au nombre de bits échangés de façon sécurisée dans le procédé ;
- code est le petit code C utilisé où BCH(255,55) X $1_3$ correspond à la concaténation du code binaire BCH d'une distance de 55 concaténée avec un code de répétition de taille 3 ;
- ε est une majoration de la probabilité que le décodage soit erroné, obtenu à partir du taux d'erreur induit par $2w^2/n$ et de la capacité de correction de C ;
- security correspond à la sécurité du paramètre ; et
- complexity correspond au nombre de binaire nécessaire pour faire tourner le procédé d'un coté.

Ces paramètres sont choisis de sorte que $n2^{2w-r} = 2^{80}$.

| $n$ | $w$ | sb | code C | $\in$ | complexity | security |
|---|---|---|---|---|---|---|
| 5000009 | 56 | 78 | BCH (127, 15) | $3.10^{-3}$ | $2^{24}$ | $2^{80}$ |
| 313603 | 100 | 131 | BCH (255, 37) | $7.10^{-3}$ | $2^{26}$ | $2^{80}$ |

Il convient de noter que dans ce premier mode de réalisation, la longueur de l'information confidentielle à décoder a été choisie de manière qu'aucune information ne soit perdue, ce qui limite la longueur code correcteur d'erreur utilisé pour le décodage.

Toutefois, selon un deuxième mode de réalisation, il est également envisageable d'utiliser toute la longueur des premier et deuxième syndromes SA et $S_B$ pour le décodage, en y ajoutant un vecteur erreur e. Ainsi, une attaque implique nécessairement la résolution d'un problème classique de décodage de syndrome pour un code correcteur d'erreur doublement circulant, ce qui le rend insoluble du fait de l'addition de l'erreur e.

Dans ce cas de figure, Alice et Bob se mettent publiquement d'accord sur une permutation P, un nombre t d'erreurs aléatoires et un code correcteur d'erreur de matrice génératrice G corrigeant un nombre d'erreurs de longueur p et de dimension k, avec un algorithme de décodage capable de résoudre un canal symétrique binaire avec une probabilité de transition $(2w^2+t)/n$.

Ensuite, Bob sélectionne une information confidentielle m qui est encodée sur une donnée C composant un message bruité $M_{2B}(C)$ tel que :

$$C = m.G + P[P_B] + e,$$

où

- G représente la matrice génératrice du code correcteur d'erreur,
- e représente le vecteur de t erreurs aléatoires de longueur m et de dimension k et
- $P[P_B]$ correspond à la permutation P de la deuxième valeur intermédiaire $P_B$.

A partir du message bruité, Alice peut donc calculer la valeur $C + P[P_B]$, lui appliquer l'algorithme de décodage du code correcteur d'erreur et en déduire l'information confidentielle m, ainsi que le deuxième valeur intermédiaire $P_B$.

Ainsi, Alice peut composer une clé de chiffrement soit à partir de l'information confidentielle m ou comme précédemment, à partir de la deuxième valeur intermédiaire $P_B$ ou d'une combinaison de l'information confidentielle m et de la deuxième valeur intermédiaire $P_B$.

De la même façon que précédemment, sont décrits dans le tableau ci-dessous, plusieurs exemples de paramètres pouvant être utilisés dans le protocole selon l'invention dans lesquels :

- le paramètre n correspond au nombre de coordonnées des syndrome SA et $S_B$ ;
- le paramètre sb correspond au nombre de bits échangés de façon sécurisée dans le procédé ;
- le paramètre t correspond au poids du vecteur d'erreur aléatoire ;
- code est le petit code C utilisé où BCH(255,55) X $1_3$ correspond à la concaténation du code binaire BCH d'une distance de 55 concaténée avec un code de répétition de taille 3 ;
- $\varepsilon$ est une majoration de la probabilité que le décodage soit erroné, obtenu à partir du taux d'erreur induit par $2w^2/n$ et de la capacité de correction de C ;
- security correspond à la sécurité du paramètre ; et
- complexity correspond au nombre de binaire nécessaire pour faire tourner le procédé d'un coté.

Ces paramètres sont choisis de sorte que $n2^{2w-r} = 2^{80}$.

| $n$ | $w$ | $t$ | sb | code C | $\in$ | complexity | security |
|---|---|---|---|---|---|---|---|
| 4451 | 33 | 150 | 78 | $BCH(127, 51) \otimes 1_{35}$ | $3.10^{-5}$ | $2^{17}$ | $2^{78}$ |
| 4877 | 33 | 150 | 131 | $BCH(255, 37) \otimes 1_{19}$ | $1.10^{-2}$ | $2^{17}$ | $2^{78}$ |
| 4877 | 34 | 150 | 91 | $BCH(255, 51) \otimes 1_{19}$ | $2.10^{-5}$ | $2^{17}$ | $2^{80}$ |
| 5387 | 34 | 150 | 131 | $BCH(255, 37) \otimes 1_{21}$ | $3.10^{-6}$ | $2^{17}$ | $2^{80}$ |

(suite)

| $n$ | $w$ | $t$ | sb | code C | $\in$ | complexity | security |
|---|---|---|---|---|---|---|---|
| 5387 | 34 | 150 | 91 | $BCH(255, 51) \otimes 1_{21}$ | $2.10^{-10}$ | $2^{17}$ | $2^{80}$ |
| 5869 | 34 | 150 | 131 | $BCH(255, 51) \otimes 1_{23}$ | $3.10^{-10}$ | $2^{18}$ | $2^{80}$ |
| 7829 | 44 | 150 | 131 | $BCH(255, 37) \otimes 1_{31}$ | $4.10^{-7}$ | $2^{19}$ | $2^{100}$ |
| 11483 | 58 | 150 | 131 | $BCH(255, 37) \otimes 1_{43}$ | $7.10^{-7}$ | $2^{20}$ | $2^{130}$ |

Il convient de souligner que, selon un troisième mode de réalisation, l'étape de réconciliation peut faire intervenir un message bruité $M_{2B}(C)$ tel que la donnée C comporte simultanément une opération de troncature sur la deuxième valeur intermédiaire PB et un vecteur d'erreurs aléatoire.

Une telle donnée C pourrait alors présenter la forme suivante $C = m.G + v[P_B] + e$.

La figure 2 représente un deuxième mode de réalisation de l'invention.

Selon ce deuxième mode de réalisation, le procédé de communication est utilisé pour permettre à Bob d'envoyer un message chiffré à l'attention de Alice selon un protocole de type El Gamal.

De même que précédemment, Alice comporte un processeur 2A, un espace mémoire 4A et une unité de communication 6A et Bob comporte un processeur 2B, un espace mémoire 4B et une unité de communication 6B.

La première étape du procédé correspond à l'étape de distribution.

Comme précédemment, Alice et Bob s'échangent préalablement des données afin de se mettre d'accord sur un anneau R, un entier n et un élément h de l'anneau R.

L'anneau R sélectionné correspond selon cet exemple à $F_2[x]/(X^n-1)$, c'est-à-dire l'ensemble des polynômes à coefficients dans le corps $F_2$ à deux éléments pour lesquels on considère le reste par la division du polynôme $(X^n-1)$, On utilise alors comme fonction norme la distance de hamming.

De façon alternative, il serait également possible de sélectionner d'autres couples d'anneau R et de norme, parmi lesquels :

- l'anneau Z/pZ et la norme euclidienne ;
- l'anneau $(Z/pZ)[x]/(x^n-1)$ et la norme euclidienne également ; et
- l'anneau $(Z/p^rZ)[X]/(x^n-1)$ et pour norme le rang métrique.

Dans ce mode de réalisation, il est possible d'utiliser un code binaire doublement circulant C [2n, n] comprenant une matrice de vérification de parité de la forme $[I_n|H]$ où $I_n$ est la matrice identité de taille n x n et h est telle que :

$$\mathbf{H} = \begin{bmatrix} h_0 & h_{n-1} & \ldots & h_1 \\ h_1 & h_0 & \ldots & h_2 \\ h_2 & h_1 & \ldots & h_3 \\ \cdots\cdots\cdots\cdots\cdots\cdots \\ h_{n-1} & h_{n-2} & \ldots & h_0 \end{bmatrix}$$

Après avoir sélectionnés l'anneau R, le générateur h et l'entier n, Alice et Bob sélectionnent séparément et de façon secrète un couple d'éléments primaires $X_A$, $Y_A$ pour Alice et $X_B$, $Y_B$ pour Bob de sorte que ces éléments primaires $X_A$, $Y_A$, $X_B$ et $Y_B$ sont de petite norme, et présente donc une petite distance de Hamming, par rapport à un nombre réel positif w. Comme précédemment, pour un anneau R: $F2[x]/(x^n-1)$ une telle petite distance de Hamming peut être de l'ordre de racine_carré(n)/10.

Alternativement, pour un mode de réalisation où l'anneau R sélectionné serait Z/pZ, un exemple de petite norme correspondant à la distance min(x,p-x) petit serait racine_carrée (p) / 100.

Alice et bob calculent ensuite respectivement les syndromes SA et $S_B$ à partir d'une fonction f telle que : SA = $f(X_A,Y_A) = X_A.h + Y_A$ et $S_B = f(X_B,Y_B) = X_B.h + Y_B$, où f est une loi de composition interne associant à tout élément $X_I$ de l'anneau R un autre élément $f(X_I)$ de l'anneau R et possédant la propriété que pour toute paire d'éléments $X_I$ et $Y_I$ de R, tels que $X_I$ et $Y_I$ ont une petite norme vis-à-vis des éléments $f(X_I)$ et $f(Y_I)$, alors $X_I.f(Y_I) - Y_I.f(X_I)$ est de petite norme.

Cet exemple de réalisation se distingue de celui de la figure 1 en ce que Alice ne transmet pas directement à Bob le premier message $M_{1A}(S_A)$ composé à partir du premier syndrome $S_A$. Au contraire, dans ce deuxième mode de réalisation, Alice émet le premier message $M_{1A}(S_A)$ et le met à disposition de Bob et d'autres entités électroniques dans un espace publique 10.

Ainsi, Bob peut récupérer le premier message $M_{1A}(S_A)$ et en déduire le premier syndrome SA en interrogeant, par requête 12a, l'espace publique 10.

Bob calcule ensuite une deuxième valeur intermédiaire $P_B$, telle que :

$$P_B = Y_B.S_A = Y_B.X_A + Y_B.h.Y_A.$$

Ainsi, Bob est en mesure de transmettre à Alice un message comprenant :

- un deuxième message $M_{1B}(S_B)$ de longueur k composé à partir du deuxième syndrome $S_B$, et
- un message bruité $M_{2B}(C)$ de longueur k composé à partir d'une donnée C obtenue à partir de la deuxième valeur intermédiaire $P_B$ et de l'information confidentielle m.

Selon un premier mode de réalisation, la donnée C est telle que

$$C = m.G + v[P_B],$$

où

- m représente alors une information confidentielle de longueur k,
- G représente la matrice génératrice d'un code correcteur d'erreur sur lesquels Alice et Bob se sont préalablement publiquement accordés ; et
- v[] représente une opération de troncature consistant à extraire p bits parmi les n bits d'un vecteur, Alice et Bob s'étant préalablement accordées sur la valeur de p.

De même que précédemment, Alice peut alors décoder C à partir du deuxième message $M_{1B}(S_B)$ et du message bruité $M_{2B}(C)$ après avoir calculé $P_A$ et C + $v[P_A]$, Alice en déduit alors m.G et l'information confidentielle m.

Sont décrits dans le tableau ci-dessous, plusieurs exemples de paramètres pouvant être utilisés dans le protocole selon l'invention, dans lesquels :

- le paramètre n correspond au nombre de coordonnées des syndrome SA et $S_B$ ;
- le paramètre sb correspond au nombre de bits échangés de façon sécurisée dans le procédé ;
- code est le petit code C utilisé où BCH(255,55) X $1_3$ correspond à la concaténation du code binaire BCH d'une distance de 55 concaténée avec un code de répétition de taille 3 ;
- ε est une majoration de la probabilité que le décodage soit erroné, obtenu à partir du taux d'erreur induit par $2w^2/n$ et de la capacité de correction de C ;
- security correspond à la sécurité du paramètre ; et
- complexity correspond au nombre de binaire nécessaire pour faire tourner le procédé d'un coté.

Ces paramètres sont choisis de sorte que $n2^{2w-r} = 2^{80}$.

| n | $\omega$ | sb | code C | $\epsilon$ | complexity | security |
|---|---|---|---|---|---|---|
| 5000009 | 56 | 78 | $BCH$ (127, 15) | $3.10^{-3}$ | $2^{24}$ | $2^{80}$ |
| 313603 | 100 | 131 | $BCH$ (255, 37) | $7.10^{-3}$ | $2^{26}$ | $2^{80}$ |

Selon un deuxième mode de réalisation, la donnée C est telle que

$$C = m.G + P[P_B],$$

où

- m représente alors une information confidentielle de longueur k
- G représente la matrice génératrice du code correcteur d'erreur ; et
- $P[P_A]$ correspond à la permutation P de la deuxième valeur intermédiaire $P_A$.

De façon similaire, Alice peut alors décoder C à partir du deuxième message $M_{1B}(S_B)$ et du message bruité $M_{2B}(C)$ après avoir calculé $P_A$ et de $C + v[P_A]$ pour déterminer m.G et en déduire l'information confidentielle m.

De la même façon que précédemment, sont décrits dans le tableau ci-dessous, plusieurs exemples de paramètres pouvant être utilisés dans le protocole selon l'invention dans lesquels :

- le paramètre n correspond au nombre de coordonnées des syndrome SA et $S_B$ ;
- le paramètre sb correspond au nombre de bits échangés de façon sécurisée dans le procédé ;
- le paramètre t correspond au poids du vecteur d'erreur aléatoire ;
- code est le petit code C utilisé où BCH(255,55) X $1_3$ correspond à la concaténation du code binaire BCH d'une distance de 55 concaténée avec un code de répétition de taille 3 ;
- $\varepsilon$ est une majoration de la probabilité que le décodage soit erroné, obtenu à partir du taux d'erreur induit par $2w^2/n$ et de la capacité de correction de C ;
- security correspond à la sécurité du paramètre ; et
- complexity correspond au nombre de binaire nécessaire pour faire tourner le procédé d'un coté.

Ces paramètres sont choisis de sorte que $n2^{2w-r} = 2^{80}$.

| $n$ | $w$ | $t$ | sb | code C | $\in$ | complexity | security |
|---|---|---|---|---|---|---|---|
| 4451 | 33 | 150 | 78 | $BCH(127, 51) \otimes \mathbf{1}_{35}$ | $3.10^{-5}$ | $2^{17}$ | $2^{78}$ |
| 4877 | 33 | 150 | 131 | $BCH(255, 37) \otimes \mathbf{1}_{19}$ | $1.10^{-2}$ | $2^{17}$ | $2^{78}$ |
| 4877 | 34 | 150 | 91 | $BCH(255, 51) \otimes \mathbf{1}_{19}$ | $2.10^{-5}$ | $2^{17}$ | $2^{80}$ |
| 5387 | 34 | 150 | 131 | $BCH(255, 37) \otimes \mathbf{1}_{21}$ | $3.10^{-6}$ | $2^{17}$ | $2^{80}$ |
| 5387 | 34 | 150 | 91 | $BCH(255, 51) \otimes \mathbf{1}_{21}$ | $2.10^{-10}$ | $2^{17}$ | $2^{80}$ |
| 5869 | 34 | 150 | 131 | $BCH(255, 51) \otimes \mathbf{1}_{23}$ | $3.10^{-10}$ | $2^{18}$ | $2^{80}$ |
| 7829 | 44 | 150 | 131 | $BCH(255, 37) \otimes \mathbf{1}_{31}$ | $4.10^{-7}$ | $2^{19}$ | $2^{100}$ |
| 11483 | 58 | 150 | 131 | $BCH(255, 37) \otimes \mathbf{1}_{41}$ | $7.10^{-7}$ | $2^{20}$ | $2^{130}$ |

Il convient de souligner que, selon un troisième mode de réalisation, l'étape de réconciliation peut faire intervenir un message bruité $M_{2B}(C)$ tel que la donnée C comporte simultanément une opération de troncature sur la deuxième valeur intermédiaire $P_B$ et un vecteur d'erreurs aléatoire.

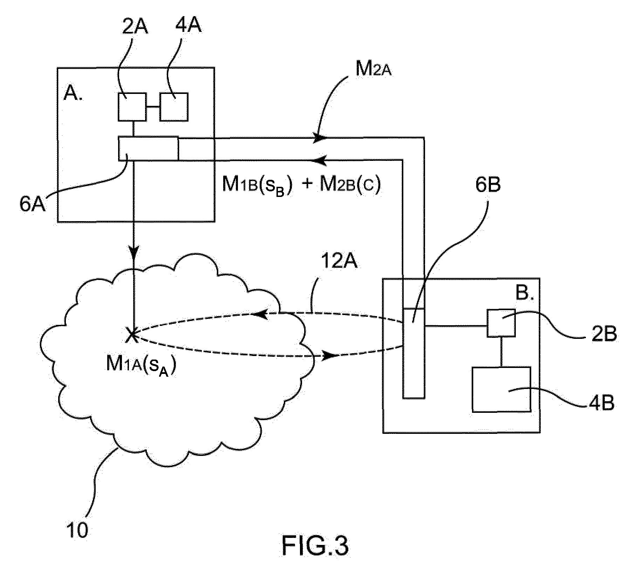

La figure 3 illustre à un troisième exemple de réalisation dans lequel le procédé selon l'invention est utilisé pour réaliser un protocole d'authentification.

Ce troisième exemple de réalisation fonctionne de la même façon que le deuxième exemple de réalisation. A l'issue du procédé tel que décrit précédemment, Alice renvoie l'information confidentielle m à Bob afin de garantir que Alice possède bien la clé privée correspondant aux deux éléments primaires $X_A$, $Y_A$ associés à la clé publique correspondant au syndrome $S_A$.

**Revendications**

1. Procédé cryptographique de communication d'une information confidentielle m entre une première entité (A) électronique et une deuxième entité (B) électronique comportant une étape de distribution et une étape de réconciliation, l'étape de distribution comportant plusieurs étapes consistant en ce que :

- d'une part, la première entité (A) :

  o calcule un premier syndrome SA = $X_A + f(Y_A)$ à partir d'une première information secrète composée de deux éléments primaires $X_A$ et $Y_A$ appartenant à un anneau R et présentant une norme sensiblement petite vis-à-vis d'un élément $f(X_A)$ ou $f(Y_A)$,

    • l'anneau R possédant l'addition et la multiplication, et
    • f étant une loi de composition interne associant à tout élément $X_I$ de l'anneau R un autre élément $f(X_I)$ de l'anneau R, et possédant la propriété que pour toute paire d'éléments $X_I$ et $Y_I$ de R, tels que

$X_I$ et $Y_I$ ont une petite norme vis-à-vis des éléments $f(X_I)$ et $f(Y_I)$, alors $X_I.f(Y_I) - Y_I.f(X_I)$ est de petite norme, et

o émet un premier message composé à partir de ce premier syndrome SA de sorte que ledit premier syndrome SA soit accessible par la deuxième entité (B),

- d'autre part, la deuxième entité (B) :

o calcule un deuxième syndrome $S_B = X_B + f(Y_B)$ à partir d'une deuxième information secrète composée de deux éléments secondaires $X_B$ et $Y_B$ appartenant à l'anneau R et présentant une norme sensiblement petite vis-à-vis d'un élément $f(X_B)$ ou $f(Y_B)$,
o transmet à la première entité (A) un deuxième message composé à partir du deuxième syndrome $S_B$ de sorte que ledit deuxième syndrome $S_B$ soit accessible par la première entité (A),

- **caractérisé en ce que**, lors de cette première étape de distribution, la première entité (A) et la deuxième entité (B) calculent respectivement une première valeur intermédiaire $P_A$ et une deuxième valeur intermédiaire $P_B$, telles que :

o $P_A = Y_A.S_B = Y_A.X_B + Y_A.f(Y_B)$, et
o $P_B = Y_B.S_A = Y_B.X_A + Y_B f(Y_A)$,
o de sorte que, lors de l'étape de réconciliation, la première entité (A) soit capable de retrouver l'information confidentielle par une opération de déchiffrement d'un message bruité composé par la deuxième entité (B) à partir, notamment, de la deuxième valeur intermédiaire $P_B$.

2. Procédé cryptographique selon la revendication 1, dans lequel le premier message émis par la première entité (A) est transmis directement à destination de la deuxième entité (B).

3. Procédé selon la revendication 2, dans lequel le message bruité composé par la deuxième entité (B) lors de la phase de réconciliation comprend une donnée C obtenue à partir notamment de la deuxième valeur intermédiaire $P_B$ et de l'information confidentielle m.

4. Procédé selon la revendication 3, dans lequel la première entité (A) décode l'information confidentielle m à partir notamment du message bruité et de la première valeur intermédiaire $P_A$.

5. Procédé cryptographique selon la revendication 4, dans lequel l'information confidentielle m est encodée dans la donnée C du message bruité, par un code correcteur d'erreur.

6. Procédé cryptographique selon la revendication 5, dans lequel la donnée C du message bruité est telle que $C = m.G + P_B + e$, avec :

- m qui représente l'information confidentielle,
- G qui représente la matrice génératrice d'un code correcteur d'erreur sur lesquels la première entité A et la deuxième entité B se sont préalablement publiquement accordées, et
- e qui représente un vecteur d'erreurs aléatoires de longueur n et de norme petite, la première entité A et la deuxième entité B s'étant préalablement publiquement accordées sur la longueur n.

7. Procédé cryptographique selon la revendication 5, dans lequel la donnée C du message bruité est telle que $C = m.G + v[P_B]$, avec :

- m qui représente l'information confidentielle,
- G qui représente la matrice génératrice d'un code correcteur d'erreur sur lesquels la première entité A et la deuxième entité B se sont préalablement publiquement accordées, et
- v[] qui représente une opération consistant à extraire p coordonnées parmi les n coordonnées d'un vecteur, la première entité A et la deuxième entité B s'étant préalablement accordées sur la valeur du p.

8. Procédé cryptographique selon la revendication 5, dans lequel la donnée C du message bruité est telle que $C = m.G + v[P_B] + e$, avec :

- m qui représente l'information confidentielle,
- G qui représente la matrice génératrice d'un code correcteur d'erreur sur lesquels la première entité A et la deuxième entité B se sont préalablement publiquement accordées,
- v[] qui représente une opération consistant à extraire p coordonnées parmi les n coordonnées d'un vecteur, la première entité A et la deuxième entité B s'étant préalablement accordées sur la valeur du p,
- e qui représente un vecteur d'erreurs aléatoires de longueur n et de norme petite, la première entité A et la deuxième entité B s'étant préalablement publiquement accordées sur la longueur n.

9. Procédé cryptographique selon l'une quelconque des revendications 1 à 8, dans lequel la première entité (A) compose une clé de chiffrement soit à partir de l'information confidentielle m, soit à partir de la deuxième valeur intermédiaire $P_B$, soit à partir d'une combinaison de l'information confidentielle et de la deuxième valeur intermédiaire $P_B$.

10. Procédé cryptographique selon la revendication 1, dans lequel, après avoir émis le premier message composé à partir du premier syndrome SA, la première entité (A) met ce premier message à disposition de la deuxième entité (B) dans un espace publique accessible au moins à une autre entité électronique.

11. Procédé cryptographique selon la revendication 10, dans lequel, après avoir calculé le deuxième syndrome $S_B$, la deuxième entité (B) transmet, à la première entité (A) :

- le deuxième message composé à partir du deuxième syndrome $S_B$, et
- le message bruité composé à partir d'une donnée C obtenue à partir de la deuxième valeur intermédiaire $P_B$ et de l'information confidentielle m.

12. Procédé cryptographique selon la revendication 11, dans lequel la première entité A décode l'information confidentielle à partir du deuxième message et du message bruité.

13. Procédé cryptographique selon la revendication 11, dans lequel la première entité A décode l'information confidentielle m à partir du deuxième syndrome $S_B$ composant le deuxième message, de la deuxième valeur intermédiaire $P_B$ composant le message bruité et de la première valeur intermédiaire $P_A$.

14. Procédé cryptographique selon l'une quelconque des revendications 11 à 13, dans lequel l'information confidentielle m est encodée dans la donnée C du message bruité, par un code correcteur d'erreur.

15. Procédé cryptographique selon la revendication 14, dans lequel la donnée C du message bruité est telle que C = $m.G + P_B + e$, avec :

- m qui représente l'information confidentielle,
- G qui représente la matrice génératrice d'un code correcteur d'erreur sur lesquels la première entité A et la deuxième entité B se sont préalablement publiquement accordées, et
- e qui représente un vecteur d'erreurs aléatoires de longueur n et de norme petite, la première entité A et la deuxième entité B s'étant préalablement publiquement accordées sur la longueur n.

16. Procédé cryptographique selon la revendication 14, dans lequel la donnée C du message bruité est telle que C = $m.G + v[P_B]$, avec :

- m qui représente l'information confidentielle,
- G qui représente la matrice génératrice d'un code correcteur d'erreur sur lesquels la première entité A et la deuxième entité B se sont préalablement publiquement accordées, et
- v[] qui représente une opération consistant à extraire p coordonnées parmi les n coordonnées d'un vecteur, la première entité A et la deuxième entité B s'étant préalablement accordées sur la valeur du p.

17. Procédé cryptographique selon la revendication 14, dans lequel la donnée C du message bruité est telle que C = $m.G + v[P_B] + e$, avec :

- m qui représente l'information confidentielle,
- G qui représente la matrice génératrice d'un code correcteur d'erreur sur lesquels la première entité A et la deuxième entité B se sont préalablement publiquement accordées,

- v[] qui représente une opération consistant à extraire p coordonnées parmi les n coordonnées d'un vecteur, la première entité A et la deuxième entité B s'étant préalablement accordées sur la valeur du p,
- e qui représente un vecteur d'erreurs aléatoires de longueur n et de norme petite, la première entité A et la deuxième entité B s'étant préalablement publiquement accordées sur la longueur n.

18. Procédé cryptographique selon l'une quelconque des revendications 9 à 17, dans lequel la première entité (A) compose message d'authentification soit à partir de l'information confidentielle m, soit à partir de la deuxième valeur intermédiaire $P_B$, soit à partir d'une combinaison de l'information confidentielle m et de la deuxième valeur intermédiaire $P_B$.

19. Procédé cryptographique selon l'une quelconque des revendications 1 à 18, dans lequel l'anneau R est l'anneau $F_q[x] / (X^n - 1)$, c'est-à-dire l'ensemble des polynômes à coefficients dans le corps Fq à q éléments pour lesquels on considère le reste par la division du polynôme $(X^n-1)$.

20. Procédé cryptographique selon la revendication 19 dans lequel la norme correspond à la distance de hamming.

21. Procédé cryptographique selon la revendication 19 ou 20, dans lequel :

- n est sensiblement égale à 6000, et
- $X_A$, $X_B$, $Y_A$, $Y_B$ présentent une norme égale à 35
- de sorte que la norme de $P_A$ - $P_B$ est sensiblement égale à 2400.

22. Procédé cryptographique selon l'une quelconque des revendications 1 à 18, dans lequel l'anneau R est l'anneau Z/pZ, c'est-à-dire l'ensemble des entiers modulo p moins le reste de la division par p.

23. Procédé cryptographique selon la revendication 22, dans lequel la norme est une norme euclidienne.

24. Procédé selon la revendication 22 ou 23, dans lequel :

- p est sensiblement égale à 2500,
- f(x)=h.x modulo p avec h un nombre aléatoire plus petit que p, et/ou
- $X_A$, $X_B$, $Y_A$, $Y_B$ sont des éléments de R de norme plus petite que racine (p).

25. Programme d'ordinateur comprenant une pluralité d'instructions pour la mise en oeuvre, à l'exécution, du procédé selon l'une quelconque des revendications 1 à 24.

26. Dispositif cryptographique comprenant des moyens de calculs agencés pour mettre en oeuvre le procédé selon l'une des revendications 1 à 24.

**Patentansprüche**

1. Kryptographisches Verfahren zum Kommunizieren einer vertraulichen Information m zwischen einer ersten elektronischen Einheit (A) und einer zweiten elektronischen Einheit (B), umfassend einen Schritt eines Verteilens und einen Schritt eines Zusammenführens, wobei der Schritt des Verteilens mehrere Schritte umfasst, welche bestehen aus:

   - einerseits durch die erste Einheit (A):

      - Berechnen eines ersten Syndroms $S_A = X_A + f(Y_A)$ ausgehend von einer ersten vertraulichen Information, welche aus zwei primären Elementen $X_A$ und $Y_A$ aufgebaut ist, welche einem Ring R zugehörig sind und eine Norm darstellen, welche im Wesentlichen klein gegenüber einem Element $F(X_A)$ oder $f(Y_A)$ ist,

         - wobei der Ring R die Addition und die Multiplikation besitzt, und
         - f ein Gesetz einer inneren Zusammensetzung ist, welches jedem Element $X_I$ des Rings R ein anderes Element $f(X_I)$ des Rings R zuordnet und die Eigenschaft aufweist, dass für jedes Paar von Elementen $X_I$ und $Y_I$ aus R, für welches $X_I$ und $Y_I$ eine kleine Norm gegenüber den Elemente $f(X_I)$ und $f(Y_I)$ aufweisen, dann $X_I.f(Y_I) - Y_I.f(X_I)$ von einer kleinen Norm ist, und

- Ausgeben einer ersten Nachricht, welche ausgehend von dem ersten Syndrom $S_A$ aufgebaut ist, derart, dass das erste Syndrom $S_A$ von der zweiten Einheit (B) zugänglich ist,

- andererseits durch die zweite Einheit (B):

- Berechnen eines zweiten Syndroms $S_B = X_B + f(Y_B)$ ausgehend von einer zweiten vertraulichen Information, welche aus zwei sekundären Elementen $X_B$ und $Y_B$ aufgebaut ist, welche dem Ring R zugehörig sind und eine Norm darstellen, welche im Wesentlichen klein gegenüber einem Element $f(X_B)$ oder $f(Y_B)$ ist,
- Übertragen einer zweiten Nachricht, welche ausgehend von dem zweiten Syndrom $S_B$ aufgebaut ist, an die erste Einheit (A), derart, dass das zweite Syndrom $S_B$ von der ersten Einheit (A) zugänglich ist,

- **dadurch gekennzeichnet, dass** während des ersten Schritts des Verteilens die erste Einheit (A) und die zweite Einheit (B) jeweils einen ersten Zwischenwert $P_A$ bzw. einen zweiten Zwischenwert $P_B$ berechnen, derart, dass:

- $P_A = Y_A.S_B = Y_A.X_B + Y_a.f(Y_B)$, und
- $P_B = Y_B.S_A = Y_B.X_A + Y_b.f(Y_A)$,
- so dass während des Schritts des Zusammenführens die erste Einheit (A) in der Lage ist, die vertrauliche Information durch eine Entschlüsselungs-Operation einer mit Rauschen versehenen Nachricht zu erhalten, welche von der zweiten Einheit (B), insbesondere ausgehend von dem zweiten Zwischenwert $P_B$, aufgebaut worden ist.

2. Kryptographisches Verfahren nach Anspruch 1, wobei die von der ersten Einheit (A) ausgegebene erste Nachricht direkt mit der zweiten Einheit (B) als Ziel übertragen wird.

3. Verfahren nach Anspruch 2, wobei die von der zweiten Einheit (B) während der Phase des Zusammenführens erstellte, mit Rauschen versehene Nachricht ein Datenelement C umfasst, welches insbesondere ausgehend von dem zweiten Zwischenwert $P_B$ und der vertraulichen Information m erhalten wird.

4. Verfahren nach Anspruch 3, wobei die erste Einheit (A) die vertrauliche Information m insbesondere ausgehend von der mit Rauschen versehenen Nachricht und dem ersten Zwischenwert $P_A$ entschlüsselt.

5. Kryptographisches Verfahren nach Anspruch 4, wobei die vertrauliche Information m in dem Datenelement C der mit Rauschen versehenen Nachricht durch einen Fehlerkorrektur-Code verschlüsselt ist.

6. Kryptographisches Verfahren nach Anspruch 5, wobei das Datenelement C der mit Rauschen versehenen Nachricht derart ist, dass $C = m.G + P_B + e$, wobei:

- m die vertrauliche Information darstellt,
- G die Generatormatrix eines Fehlerkorrektur-Codes darstellt, auf welchen sich die erste Einheit A und die zweite Einheit B zuvor öffentlich geeinigt haben, und
- e einen Vektor von Zufallsfehlern der Länge n und mit kleiner Norm darstellt, wobei sich die erste Einheit A und die zweite Einheit B zuvor öffentlich auf die Länge n geeinigt haben.

7. Kryptographisches Verfahren nach Anspruch 5, wobei das Datenelement C der mit Rauschen versehenen Nachricht derart ist, dass $C = m.G + v[P_B]$, wobei:

- m die vertrauliche Information darstellt,
- G die Generatormatrix eines Fehlerkorrektur-Codes darstellt, auf welchen sich die erste Einheit A und die zweite Einheit B zuvor öffentlich geeinigt haben, und
- v[] eine Operation darstellt, welche daraus besteht, p Koordinaten aus den n Koordinaten eines Vektors zu extrahieren, wobei die erste Einheit A und die zweite Einheit B sich zuvor auf den Wert von p geeinigt haben.

8. Kryptographisches Verfahren nach Anspruch 5, wobei das Datenelement C der mit Rauschen versehenen Nachricht derart ist, dass $C = m.G + v[P_B] + e$, wobei:

- m die vertrauliche Information darstellt,
- G die Generatormatrix eines Fehlerkorrektur-Codes darstellt, auf welchen sich die erste Einheit A und die zweite Einheit B zuvor öffentlich geeinigt haben, und
- v[] eine Operation darstellt, welche daraus besteht, p Koordinaten aus den n Koordinaten eines Vektors zu extrahieren, wobei die erste Einheit A und die zweite Einheit B sich zuvor auf den Wert von p geeinigt haben,
- e einen Vektor von Zufallsfehlern der Länge n und mit kleiner Norm darstellt, wobei sich die erste Einheit A und die zweite Einheit B zuvor öffentlich auf die Länge n geeinigt haben.

9. Kryptographisches Verfahren nach einem der Ansprüche 1 bis 8, wobei die erste Einheit (A) einen Verschlüsselungsschlüssel entweder ausgehend von der vertraulichen Information m, ausgehend von dem zweiten Zwischenwert $P_B$, oder ausgehend von einer Kombination der vertraulichen Information und des zweiten Zwischenwerts $P_B$ aufbaut.

10. Kryptographisches Verfahren nach Anspruch 1, wobei nach dem Ausgeben der ersten Nachricht, welche ausgehend von dem ersten Syndrom $S_A$ aufgebaut worden ist, die erste Einheit (A) diese erste Nachricht der zweiten Einheit (B) in einem öffentlichen Raum zur Verfügung stellt, welcher wenigstens einer weiteren elektronischen Einheit zugänglich ist.

11. Kryptographisches Verfahren nach Anspruch 10, wobei nachdem das zweite Syndrom $S_B$ berechnet worden ist, das zweite Element (B) zu dem ersten Element (A) überträgt:

   - die ausgehend von dem zweiten Syndrom $S_B$ aufgebaute zweite Nachricht, und
   - die ausgehend von einem Datenelement C, welches ausgehend von dem zweiten Zwischenwert $P_B$ und der vertraulichen Information m erhalten wird, erzeugte mit Rauschen versehene Nachricht.

12. Kryptographisches Verfahren nach Anspruch 11, wobei die erste Einheit A die vertrauliche Information ausgehend von der zweiten Nachricht und der mit Rauschen versehenen Nachricht entschlüsselt.

13. Kryptographisches Verfahren nach Anspruch 11, wobei die erste Einheit A die vertrauliche Information m ausgehend von dem zweiten Syndrom $S_B$, aus welchem die zweite Nachricht aufgebaut ist, dem zweiten Zwischenwert $P_B$, aus welchem die mit Rauschen versehene Nachricht aufgebaut ist, und dem ersten Zwischenwert $P_A$ entschlüsselt.

14. Kryptographisches Verfahren nach einem der Ansprüche 11 bis 13, wobei die vertrauliche Information m in dem Datenelement C der mit Rauschen versehenen Nachricht durch einen Fehlerkorrektur-Code verschlüsselt wird.

15. Kryptographisches Verfahren nach Anspruch 14, wobei das Datenelement C der mit Rauschen versehenen Nachricht derart ist, dass $C = m.G + P_B + e$, wobei:

   - m die vertrauliche Information darstellt,
   - G die Generatormatrix eines Fehlerkorrektur-Codes darstellt, auf welchen sich die erste Einheit A und die zweite Einheit B zuvor öffentlich geeinigt haben, und
   - e einen Vektor von Zufallsfehlern der Länge n und mit kleiner Norm darstellt, wobei sich die erste Einheit A und die zweite Einheit B zuvor öffentlich auf die Länge n geeinigt haben.

16. Kryptographisches Verfahren nach Anspruch 14, wobei das Datenelement C der mit Rauschen versehenen Nachricht derart ist, dass $C = m.G + v[P_{B]}$, wobei:

   - m die vertrauliche Information darstellt,
   - G die Generatormatrix eines Fehlerkorrektur-Codes darstellt, auf welchen sich die erste Einheit A und die zweite Einheit B zuvor öffentlich geeinigt haben, und
   - v[] eine Operation darstellt, welche daraus besteht, p Koordinaten aus den n Koordinaten eines Vektors zu extrahieren, wobei die erste Einheit A und die zweite Einheit B sich zuvor auf den Wert von p geeinigt haben.

17. Kryptographisches Verfahren nach Anspruch 14, wobei das Datenelement C der mit Rauschen versehenen Nachricht derart ist, dass $C = m.G + v[P_B] + e$, wobei:

   - m die vertrauliche Information darstellt,
   - G die Generatormatrix eines Fehlerkorrektur-Codes darstellt, auf welchen sich die erste Einheit A und die zweite Einheit B zuvor öffentlich geeinigt haben,
   - v[] eine Operation darstellt, welche daraus besteht, p Koordinaten aus den n Koordinaten eines Vektors zu extrahieren, wobei die erste Einheit A und die zweite Einheit B sich zuvor auf den Wert von p geeinigt haben,

- e einen Vektor von Zufallsfehlern der Länge n und mit kleiner Norm darstellt, wobei sich die erste Einheit A und die zweite Einheit B zuvor öffentlich auf die Länge n geeinigt haben.

**18.** Kryptographisches Verfahren nach einem der Ansprüche 9 bis 17, wobei die erste Einheit (A) eine Authentifizierungsnachricht entweder ausgehend von der vertraulichen Information m, ausgehend von dem zweiten Zwischenwert $P_B$ oder ausgehend von einer Kombination der vertraulichen Information m und dem zweiten Zwischenwert $P_B$ aufbaut.

**19.** Kryptographisches Verfahren nach einem der Ansprüche 1 bis 18, wobei der Ring R der Ring $F_q[x] / (X^n - 1)$ ist, d.h. die Menge der Polynome in dem Körper Fq mit q Elementen, für welche der Rest durch die Division des Polynoms $(X^n - 1)$ betrachtet wird.

**20.** Kryptographisches Verfahren nach Anspruch 19, wobei die Norm dem Hamming-Abstand entspricht.

**21.** Kryptographisches Verfahren nach Anspruch 19 oder 20, wobei:

- n im Wesentlichen gleich 6000 ist, und
- $X_A$, $X_B$, $Y_A$, $Y_B$ eine Norm gleich 35 darstellen
- derart, dass die Norm von $P_A - P_B$ im Wesentlichen gleich 2400 ist.

**22.** Kryptographisches Verfahren nach einem der Ansprüche 1 bis 18, wobei der Ring R der Ring Z/pZ ist, d.h. die Menge der Ganzzahlen modulo p minus den Rest der Division durch P.

**23.** Kryptographisches Verfahren nach Anspruch 22, wobei die Norm eine euklidische Norm ist.

**24.** Verfahren nach Anspruch 22 oder 23, wobei:

- p im Wesentlichen gleich 2500 ist,
- f(x) = h.x modulo p, wobei h eine Zufallszahl kleiner p ist, oder/und
- $X_A$, $X_B$, $Y_A$, $Y_B$ Elemente von R einer kleineren Norm als Wurzel (p) sind.

**25.** Computerprogramm, umfassend eine Mehrzahl von Anweisungen zum Durchführen des Verfahrens nach einem der Ansprüche 1 bis 24 bei seiner Ausführung.

**26.** Kryptographische Vorrichtung, umfassend Berechnungsmittel, welche dazu eingerichtet sind, das Verfahren nach einem der Ansprüche 1 bis 24 durchzuführen.

**Claims**

**1.** Cryptographic method for communicating a confidential piece of information m between a first electronic entity (A) and a second electronic entity (B) comprising a distribution step and a reconciliation step, the distribution step comprising several steps consisting in that:

• on the one hand, the first entity (A):

o calculates a first syndrome $S_A = X_A + f(Y_A)$ based on a first secret piece of information composed of two primary elements $X_A$ and $Y_A$ belonging to a ring R and having a norm that is substantially small relative to an element $f(X_A)$ or $f(Y_A)$,

■ the ring R having addition and multiplication, and
■ f being an internal composition law associating with any element $X_I$ of the ring R, another element $f(X_I)$ of the ring R, and having the property that, for any pair of elements $X_I$ and $Y_I$ of R, such that $X_I$ and $Y_I$ have a norm that is small relative to the elements $f(X_I)$ and $f(Y_I)$, then $X_I.f(Y_I) - Y_I.f(X_I)$ has a small norm, and

o generates a first message composed from this first syndrome $S_A$ such that the said first syndrome $S_A$ is accessible by the second entity (B),

• on the other hand, the second entity (B):

○ calculates a second syndrome $S_B = X_B + f(Y_B)$ based on a second secret piece of information composed of two secondary elements $X_B$ and $Y_B$ belonging to the ring R and having a norm that is substantially small relative to an element $f(X_B)$ or $f(Y_B)$,

○ transmits to the first entity (A) a second message composed from the second syndrome $S_B$ such that the said second syndrome $S_B$ is accessible by the first entity (A),

• **characterized in that**, during this first distribution step, the first entity (A) and the second entity (B) respectively calculate a first intermediate value $P_A$ and a second intermediate value $P_B$, such that:

○ $P_A = Y_A.S_B = Y_A.X_B + Y_A.f(Y_B)$, and
○ $P_B = Y_B.S_A = Y_B.X_A + Y_B.f(Y_A)$,

○ such that, during the reconciliation step, the first entity (A) is capable of recovering the confidential information by an operation for decrypting a noisy message composed by the second entity (B) from, among others, the second intermediate value $P_B$.

2. Cryptographic method according to Claim 1, in which the first message generated by the first entity (A) is transmitted directly to the second entity (B).

3. Method according to Claim 2, in which the noisy message composed by the second entity (B) during the reconciliation phase comprises a data value C obtained among others from the second intermediate value $P_B$ and from the confidential information m.

4. Method according to Claim 3, in which the first entity (A) decodes the confidential information m from among others the noisy message and the first intermediate value $P_A$.

5. Cryptographic method according to Claim 4, in which the confidential information m is encoded within the data value C of the noisy message, by an error correcting code.

6. Cryptographic method according to Claim 5, in which the data value C of the noisy message is such that $C = m.G + P_B + e$, with:

   ▪ m representing the confidential information,
   ▪ G representing the matrix generator of an error correcting code on which the first entity A and the second entity B have previously publicly agreed, and
   ▪ e representing a vector of random errors with length n and a small norm, the first entity A and the second entity B having previously publicly agreed on the length n.

7. Cryptographic method according to Claim 5, in which the data value C of the noisy message is such that $C = m.G + v[P_B]$, with:

   ▪ m representing the confidential information,
   ▪ G representing the matrix generator of an error correcting code on which the first entity A and the second entity B have previously publicly agreed, and
   ▪ v[] representing an operation consisting in extracting p coordinates from amongst the n coordinates of a vector, the first entity A and the second entity B having previously agreed on the value of the p.

8. Cryptographic method according to Claim 5, in which the data value C of the noisy message is such that $C = m.G + v[P_B] + e$, with:

   ▪ m representing the confidential information,
   ▪ G representing the matrix generator of an error correcting code on which the first entity A and the second entity B have previously publicly agreed,
   ▪ v[] representing an operation consisting in extracting p coordinates from amongst the n coordinates of a vector, the first entity A and the second entity B having previously agreed on the value of the p,
   ▪ e representing a vector of random errors with length n and a small norm, the first entity A and the second entity B having previously publicly agreed on the length n.

9.  Cryptographic method according to any one of Claims 1 to 8, in which the first entity (A) composes an encryption key either from the confidential information m, or from the second intermediate value $P_B$, or from a combination of the confidential information and of the second intermediate value $P_B$.

10. Cryptographic method according to Claim 1, in which, after having generated the first message composed from the first syndrome $S_A$, the first entity (A) put this first message at the disposal of the second entity (B) in a public space accessible to at least one other electronic entity.

11. Cryptographic method according to Claim 10, in which, after having calculated the second syndrome $S_B$, the second entity (B) transmits, to the first entity (A) :

    • the second message composed from the second syndrome $S_B$, and
    • the noisy message composed from a data value C obtained from the second intermediate value $P_B$ and the confidential information m.

12. Cryptographic method according to Claim 11, in which the first entity A decodes the confidential information from the second message and the noisy message.

13. Cryptographic method according to Claim 11, in which the first entity A decodes the confidential information m from the second syndrome $S_B$ composing the second message, the second intermediate value $P_B$ composing the noisy message and the first intermediate value $P_A$.

14. Cryptographic method according to any one of Claims 11 to 13, in which the confidential information m is encoded within the data value C of the noisy message, by an error correcting code.

15. Cryptographic method according to Claim 14, in which the data value C of the noisy message is such that $C = m.G + P_B + e$, with:

    ▪ m representing the confidential information,
    ▪ G representing the matrix generator of an error correcting code on which the first entity A and the second entity B have previously publicly agreed, and
    ▪ e representing a vector of random errors with length n and a small norm, the first entity A and the second entity B having previously publicly agreed on the length n.

16. Cryptographic method according to Claim 14, in which the data value C of the noisy message is such that $C = m.G + v[P_B]$, with:

    ▪ m representing the confidential information,
    ▪ G representing the matrix generator of an error correcting code on which the first entity A and the second entity B have previously publicly agreed, and
    ▪ v[] representing an operation consisting in extracting p coordinates from amongst the n coordinates of a vector, the first entity A and the second entity B having previously agreed on the value of the p.

17. Cryptographic method according to Claim 14, in which the data value C of the noisy message is such that $C = m.G + v[P_B] + e$, with:

    ▪ m representing the confidential information,
    ▪ G representing the matrix generator of an error correcting code on which the first entity A and the second entity B have previously publicly agreed,
    ▪ v[] representing an operation consisting in extracting p coordinates from amongst the n coordinates of a vector, the first entity A and the second entity B having previously agreed on the value of the p,
    ▪ e representing a vector of random errors with length n and with a small norm, the first entity A and the second entity B having previously publicly agreed on the length n.

18. Cryptographic method according to any one of Claims 9 to 17, in which the first entity (A) composes an authentication message either from the confidential information m, or from the second intermediate value $P_B$, or from a combination of the confidential information m and of the second intermediate value $P_B$.

**19.** Cryptographic method according to any one of Claims 1 to 18, in which the ring R is the ring $F_q[x]/(X^n - 1)$, in other words the set of polynomials with coefficients in the body $F_q$ with q elements for which the remainder by division with the polynomial $(X^n - 1)$ is considered.

**20.** Cryptographic method according to Claim 19 in which the norm corresponds to the Hamming distance.

**21.** Cryptographic method according to either of Claims 19 and 20, in which:

- n is substantially equal to 6000, and
- $X_A$, $X_B$, $Y_A$, $Y_B$ have a norm equal to 35
- such that the norm of $P_A$ - $P_B$ is substantially equal to 2400.

**22.** Cryptographic method according to any one of Claims 1 to 18, in which the ring R is the ring Z/pZ, in other words the set of integers modulo p minus the remainder of the division by p.

**23.** Cryptographic method according to Claim 22, in which the norm is a Euclidian norm.

**24.** Method according to either of Claims 22 and 23, in which:

- p is substantially equal to 2500,
- f(x)=h.x modulo p with h a random number smaller than p, and/or
- $X_A$, $X_B$, $Y_A$, $Y_B$ are elements of R with a norm smaller than the square root of p.

**25.** Computer programme comprising a plurality of instructions for the implementation, when it is executed, of the method according to any one of Claims 1 to 24.

**26.** Cryptographic device comprising computation means arranged to implement the method according to one of Claims 1 to 24.

$M_{1A}(s_A)$

$M_{1B}(s_B)$

$M_{2B}(c)$

FIG.1

$M_{1B}(s_B) + M_{2B}(c)$

$M_{1A}(s_A)$

FIG.2

2A   4A

A.

M2A

M1B($s_B$) + M2B(c)

6A

6B

12A

B.

2B

M1A($s_A$)

4B

10

FIG.3

## RÉFÉRENCES CITÉES DANS LA DESCRIPTION

**Documents brevets cités dans la description**

- EP 0661846 A

**Littérature non-brevet citée dans la description**

- A new identification scheme based on syndrome decoding. *J. Stern,* 1993

- **W. DIFFIE ; M. E. HELLMAN.** New Directions in Cryptography. *IEEE Transactions on Information Theory,* 1976, vol. IT-22